# EUROPÄISCHE PATENTSCHRIFT

(11) **EP 1 542 341 B1**
(45) Veröffentlichungstag und Bekanntmachung des Hinweises auf die Patenterteilung: **03.05.2006**
(21) Anmeldenummer: 03293149.5
(22) Anmeldetag: 12.12.2003
(51) Int. Cl.: H02K 15/06

(54) **Verfahren zur Herstellung einer dreiphasigen Wechselstromwicklung für einen Linearmotor**
Process for producing a three phase coil winding for a linear motor
Procédé de fabrication d'un bobinage triphasé pour moteur linéaire

(43) Veröffentlichungstag der Anmeldung: 15.06.2005
(73) Patentinhaber: Nexans, 75008 Paris (FR)
(72) Erfinder: Zamzow, Peter, Dipl.-Ing., 44795 Bochum (DE); Steinbrink, Dirk, Dr.-Ing., 30938 Burgwedel (DE); Talian, Georg, DIpl.-Ing., 47441 Moers (DE)
(74) Vertreter: Döring, Roger

(56) Entgegenhaltungen:
- EP-A- 0 314 899
- DE-A- 4 022 476
- DE-A- 4 230 810

## Beschreibung

Die Erfindung betrifft ein Verfahren zur Herstellung einer dreiphasigen Wechselstromwicklung für einen Linearmotor.

Linearmotoren sind für elektrische Antriebe unterschiedlichster Art seit langem bekannt. Es gibt sowohl Gleichstrom - als auch Wechselstrom-Synchron- und Asynchron-Motoren. Beim Linearmotor sind Ständer sowie Läufer im Gegensatz zum konventionellen Motor nicht kreisförmig, sondern geradlinig angeordnet. Die elektrische Energie wird dabei so in mechanische Energie umgesetzt, daß sie unmittelbar für eine Translationsbewegung nutzbar wird.

Der Linearmotor kann prinzipiell eine in Nuten des Stators angeordnete Erregerwicklung haben, die bei Wechselstrom dreiphasig ausgebildet ist. Der Läuferteil besteht dann entweder aus einer Schiene aus elektrisch gut leitendem Material, wie Kupfer oder Aluminium (Asynchronmotor), oder aus einem permanentmagnetischen Material (Synchronmotor). Es sind allerdings auch Linearmotoren bekannt, bei denen die Wicklung im Läuferteil angeordnet ist.

Einsatzgebiete für Linearmotoren sind beispielsweise der Personenverkehr, das Förder-und Transportwesen, Fließbänder etc. Je nach Einsatzgebiet sind die Motoren mehr oder weniger lang. Die Wicklung kann dabei in den Nuten des Stators in üblicher Weise angeordnet werden. Je länger der Stator ist, desto aufwendiger wird die Arbeit zur Anbringung der einzelnen Wicklungsstränge. Für diese Arbeiten ist bisher stets ein Fachmann erforderlich.

Bei der Verwendung eines Linearmotors mit langgestrecktem, die Erregerwicklung tragendem Stator als Antrieb für ein Beförderungsmittel muß der Stator mit der Wicklung entlang der gesamten Fahrstrecke eines anzutreibenden Fahrzeugs montiert werden. Hierzu wird zunächst der aktive Teil des Stators (der Induktor) in Form von vielen Blechpaketen an dem Träger befestigt, auf welchem das Fahrzeug bewegt werden soll. Danach wird in die nach unten offenen Nuten der Blechpakete die aus den drei elektrischen Kabeln bestehende Wicklung eingebracht. Die Wicklung muß, wenn nicht irgendwelche Hilfsvorrichtungen eingesetzt werden können, von unten in die Nuten eingedrückt und darin festgelegt werden, was einen erheblichen Montageaufwand bedingt, zumal diese Arbeiten stets über Kopf ausgeführt werden müssen.

Bei einem aus der DE 28 27 150 A bekannten Verfahren wird die gesamte werksseitig vorgefertigte Wicklung zunächst auf eine Vielzahl von Auflagen gelegt, die unterhalb des Induktors angeordnet sind. Anschließend wird die Wicklung nach und nach in die Nuten des Induktors eingebracht. Trotz der Verwendung einer vorgefertigten einteiligen Wicklung ist dieses Verfahren noch aufwendig, zumal es immer noch Handarbeit beim Eindrücken in die Nuten erfordert.

Aus der EP-A-0314899 ist ein Verfahren zur Herstellung einer dreiphasigen Wechselstromwicklung für einen Linearmotor bekannt, der einen Löuferteil und einen langgestreckten, aus einem mit Nuten versehenen Induktor und drei in den mit Ausnehmungen für Verschlußelemente ausgerüsteten Nuten liegenden Wicklungssträngen bestehenden Stator aufweist, bei welchem die Wicklungsstränge aus elektrischen Kabeln bestehen, die zu einer zusammenhängenden Wicklung miteinande durch Halterungsverbunden werden. Jeder der drei Wicklungsstränge wird zunächst nach Art eines Mäanders geformt und die Wicklungsstränge werden gemeinsam in die Nuten des Stators eingedrückt/ und durch die Halterungen darin festgehalten.

Nachteilig bei diesem Verfahren ist, daß die Länge der verlegbaren Wicklung begrenzt ist durch das Fassungsvermögen und die Handhabbarkeit der Kobelspule.

Aus der Broschüre "Transrapid-Zukunft wird Realität" der Anmelderin ist es bekannt, das Formen der Mäander sowie der erforderlichen Kröpfungen durch ein auf dem Fahrweg bewegbares Verlegefahrzeug durchzuführen. Dazu wird zunächst eine Spule mit einem ersten Kabel auf dem Verlegefahrzeug positioniert, das Kabel von der Spule abgezogen und im selben Arbeitsgang werden die Mäander sowie die Kröpfungen erzeugt.

Zur Fixierung der Geometrie des verformten Kabels werden Eisenbänder mit Nuten auf das geformte Kabel gedrückt. Abschließend wird das Kabel gemeinsam mit den Eisenbändern in die Nut des Induktors gedrückt. Ebenso wird mit den zwei nachfolgenden Kabeln verfahren.

Nachteilig hierbei ist, daß zusätzliche vorgeformte Metallbänder verwendet werden müssen.

Aufgabe der vorliegenden Erfindung ist es, ein Verfahren anzugeben, bei welchem die Wicklung weitestgehend werksseitig herstellbar ist, und die Geometrie der Wicklung während des Transportes und beim Einlegen in die Nuten erhalten bleibt.

Diese Aufgabe wird durch die im Anspruch 1 erfaßten Merkmale gelöst.

Weitere vorteilhafte Ausgestaltungen der Erfindung sind in den Unteransprüchen sowie in der nachfolgenden Figurenbeschreibung erfaßt.

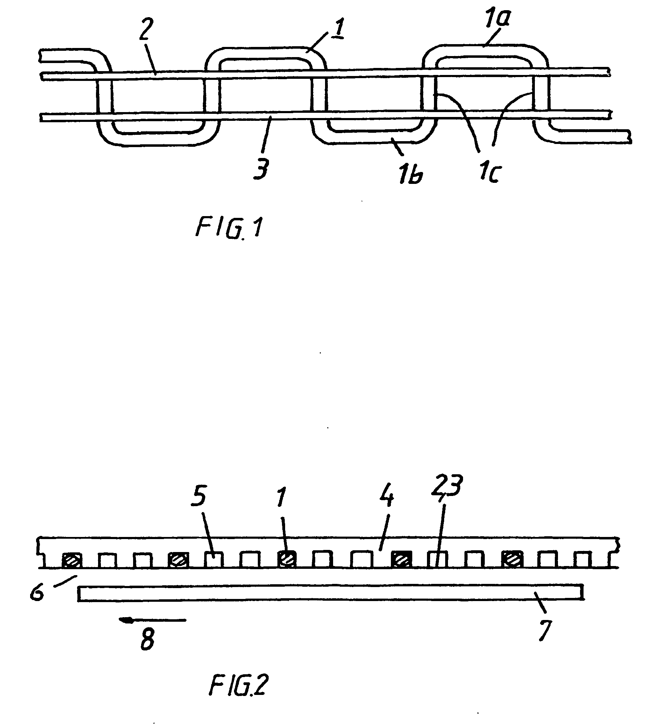

Die Erfindung ist anhand der in den Figuren 1 und 2 schematisch dargestellten Ausführungsbeispiele näher erläutert.

In der Figur 1 ist die Draufsicht auf einen Wicklungsstrang dargestellt, welcher aus einem Kabel 1 besteht, welches nach Art eines Mäanders geformt ist. Zusätzlich sind die Bereiche 1a und 1b gekröpft, d. h. aus der Ebene des Wicklungsstranges nach oben oder nach unten verformt.

Die Geometrie des Wicklungsstranges wird durch zwei Haltebänder 2 und 3 aufrechterhalten, welche mit den Bereichen 1c des Kabels 1 verklebt sind. Die Haltebänder 2 und 3 bestehen aus einem zugfesten Material, vorzugsweise einem Glasgewebeband, welches an einer Seite eine Kleberschicht trägt. Das Formen des Mäanders und das Kröpfen wird auf einer dafür vorgesehenen Maschine im Herstellwerk durchgeführt. Der so hergestellte Wicklungsstrang wird auf eine Kabeltrommel gewickelt und zum Verwendungsort transportiert. Beim Aufwickeln auf die Kabeltrommel ist darauf zu achten, daß die Haltebänder 2 und 3 um Trommelkern hinweisen.

Die Figur 2 zeigt in schematischer Darstellung eine seitliche Ansicht eines Linearmotors.

Mit 4 ist der aus ferromagnetischem Material bestehende Stator bezeichnet, in dessen Nuten 5 ein Wicklungsstrang 1 zur Erzeugung eines elektromagnetischen Wanderfeldes angeordnet ist. Durch einen Luftspalt 6 vom Stator 4 getrennt ist der Läufer 7 an einem zu bewegenden Gegenstand z. B. dem Transrapid angebracht, welcher bei Betrieb des Linearmotors beispielsweise in Richtung des Pfeiles 8 bewegt werden kann. Der Läufer 7 besteht beispielsweise aus Kupfer oder Aluminium oder aus permanentmagnetischem Material und ist an dem Fahrzeug befestigt, welches entlang einer vorgegebenen Spur bewegt wird.

In der Figur 2 ist der Zustand nach dem Einlegen des ersten Wicklungsstranges 1 in die Nuten 5 des Stators 4 dargestellt. Nach dem Eindrücken des ersten Wicklungsstranges 1 in die Nuten 5 des Stators 4 werden die Haltebänder 2 und 3 abgezogen, um die zwischen den bereits mit dem ersten Wicklungsstrang 1 belegten Nuten 5 gelegenen Nuten 5 für den zweiten Wicklungsstrang frei zugänglich zu machen.

Der zweite Wicklungsstrang wird dann von einer zweiten Kabeltrommel abgezogen und in die den bereits belegten Nuten 5 benachbarten Nuten 5 eingedrückt. Auch von diesem Wicklungsstrang werden die Haltebänder 2 und 3 abgezogen. Abschließend wird auf gleiche Weise der dritte Wicklungsstrang in die freien Nuten 5 eingelegt. Beim dritten Wicklungsstrang können die Haltebänder 2 und 3 verbleiben oder abgezogen werden.

Nach einer besonders vorteilhaften Ausgestaltung der Erfindung sind die Haltebänder 2 und 3 derart an den Wicklungssträngen 1 befestigt, daß sie außerhalb der Nuten 5 des Stators gelegen sind. Ein Abziehen bzw. Durchtrennen der Haltebänder 2 und 3 kann dann entfallen.

Die Wicklungsstränge können vorkonfektioniert sein, d. h. an die Länge des Fahrweges angepaßt sein. Zum Anschluß an benachbart Wicklungsstränge können werksseitig Steckverbinder an die Enden der Wicklungsstränge angebracht werden, so daß für die Montage keine aufwendigen Muffen mehr erforderlich sind.

Nach einem weiteren Gedanken der Erfindung können die drei Wicklungsstränge 1 zu einer Wicklung zusammengefaßt werden und beispielsweise auf einer Kabeltrommel zum Einsatzort transportiert werden, wo die Wicklung dann als Ganzes in die Nuten des Stators eingedrückt wird.

## Patentansprüche

1. Verfahren zur Herstellung einer dreiphasigen Wechselstromwicklung für einen Linearmotor, der einen Läuferteil und einen langgestreckten, aus einem mit Nuten (5) versehenen Induktor und drei in den mit Ausnehmungen für Verschlußelemente ausgerüsteten Nuten liegenden Wicklungssträngen (1) bestehenden Stator (4) aufweist, bei welchem die Wicklungsstränge aus elektrischen Kabeln bestehen, die zu einer zusammenhängenden Wicklung miteinander verbindbar sind, wobei
jeder der drei Wicklungsstränge (1) zunächst nach Art eines Mäanders geformt wird,
die Mäanderwindungen jedes Wicklungsstrangs (1) danach durch zumindest ein an dieselben angeklebtes, bandförmiges Element (2,3) vereinigt werden,
die Wicklungsstränge (1) anschließend einzeln nacheinander in die Nuten (5) des Induktors eingedrückt werden und
die bandförmigen Elemente (2,3) nach dem Einlegen der Wicklungsstränge (1) in die Nuten (5) entfernt werden.

2. Verfahren nach Anspruch 1, **dadurch gekennzeichnet, daß** zwei voneinander beabstandete bandförmige Elemente (2,3) zur Fixierung der Mäanderwindungen jedes Wicklungsstrangs (1) verwendet werden.

3. Verfahren nach Anspruch 1 oder 2, **dadurch gekennzeichnet, daß** die bandförmigen Elemente (2,3) an der dem Induktor zugekehrten Oberfläche angeordnet werden.

4. Verfahren nach einem der Ansprüche 1 bis 3, **dadurch gekennzeichnet, daß** die bandförmigen Elemente (2,3) an den aus den Nuten (5) herausragenden Bereichen der Wicklungsstränge (1) angeordnet werden.

5. Verfahren nach einem der Ansprüche 1 bis 4, **dadurch gekennzeichnet, daß** die bandförmigen Elemente (2,3) aus verstärktem Glasgewebe verwendet werden.

6. Verfahren nach einem der Ansprüche 1 bis 4, **dadurch gekennzeichnet, daß** jeder Wicklungsstrang (1) nach dem Fixieren der Mäanderwindungen auf eine Kabeltrommel oder Kabelspule aufgewickelt, zum Verwendungsort transportiert und anschließend in die Nuten (5) des Induktors gedrückt wird.

7. Verfahren nach einem der Ansprüche 1 bis 6 für einen auf einem Träger bestimmter Länge montierten Stator, **dadurch gekennzeichnet, daß** die einzelnen Wicklungsstränge (1) auf die Länge des Trägers vorkonfektioniert werden.

8. Verfahren nach Anspruch 7, **dadurch gekennzeichnet, daß** jeder Wicklungsstrang (1) endseitig mit Steckverbindungselementen versehen wird.

## Claims

1. Method for producing a three-phase AC winding for a linear motor, which has a rotor part and an elongate stator (4), which comprises an inductor provided with slots (5) and three winding phases (1) positioned in the slots which are equipped with cutouts for closure elements, in which the winding phases comprise electrical cables which can be connected to one another so as to form a connected winding, each of the three winding phases (1) initially being formed in the manner of a meander, the meander turns of each winding phase (1) then being combined by at least one strip-shaped element (2, 3) which is adhesively bonded to said meander turns, the winding phases (1) then being pressed individually one after the other into the slots (5) of the inductor, and the strip-shaped elements (2, 3) being removed once the winding phases (1) have been inserted into the slots (5).

2. Method according to Claim 1, **characterized in that** two strip-shaped elements (2, 3) which are spaced apart from one another are used for the purpose of fixing the meander turns of each winding phase (1).

3. Method according to Claim 1 or 2, **characterized in that** the strip-shaped elements (2, 3) are arranged on the surface facing the inductor.

4. Method according to one of Claims 1 to 3, **characterized in that** the strip-shaped elements (2, 3) are arranged on those regions of the winding phases (1) which protrude out of the slots (5).

5. Method according to one of Claims 1 to 4, **characterized in that** the strip-shaped elements (2, 3) made from reinforced woven glass fabric are used.

6. Method according to one of Claims 1 to 4, **characterized in that** each winding phase (1) is wound onto a cable drum or cable coil once the meander turns have been fixed, is transported to the point of use and is then pressed into the slots (5) of the inductor.

7. Method according to one of Claims 1 to 6 for a stator mounted on a mount having a specific length, **characterized in that** the individual winding phases (1) are prefabricated to the length of the mount.

8. Method according to Claim 7, **characterized in that** each winding phase (1) is provided at one end with plug connection elements.

## Revendications

1. Procédé de fabrication d'un bobinage triphasé pour moteur linéaire qui présente une partie induit et un stator (4) allongé constitué d'un inducteur doté d'encoches (5) et de trois faisceaux de bobinage (1) reposant dans les encoches munies d'évidements pour des éléments d'obturation, dans lequel les faisceaux de bobinage sont constitués de câbles électriques qui peuvent être réunis par des attaches pour former un bobinage unifié, chacun des trois faisceaux de bobinage (1) étant d'abord formé en méandre, les spires en méandre de chaque faisceau de bobinage (1) étant ensuite réunies par au moins un élément en forme de bande (2, 3) collé sur celles-ci, les faisceaux de bobinage (1) étant ensuite enfoncés l'un après l'autre dans les encoches (5) de l'inducteur et les éléments en forme de bandes (2, 3) étant éliminés après l'insertion des faisceaux de bobinage (1) dans les encoches (5).

2. Procédé selon la revendication 1, **caractérisé en ce que** deux éléments en forme de bandes (2, 3) espacés l'un par rapport à l'autre sont utilisés pour fixer les spires en méandre de chaque faisceau de bobinage (1).

3. Procédé selon la revendication 1 ou 2, **caractérisé en ce que** les éléments en forme de bandes (2, 3) sont disposés sur la surface orientée vers l'inducteur.

4. Procédé selon l'une quelconque des revendications 1 à 3, **caractérisé en ce que** les éléments en forme de bandes (2, 3) sont disposés sur les zones des faisceaux de bobinage (1) saillant des encoches (5).

5. Procédé selon l'une quelconque des revendications 1 à 4, **caractérisé en ce que** les éléments en forme de bandes (2, 3) sont constitués de tissu de verre renforcé.

6. Procédé selon l'une quelconque des revendications 1 à 4, **caractérisé en ce que**, après la fixation des spires de méandre, chaque faisceau de bobinage (1) est enroulé sur un touret de câble ou une bobine de câble, transporté jusqu'au lieu d'utilisation et ensuite enfoncé dans les encoches (5) de l'inducteur.

7. Procédé selon l'une quelconque des revendications 1 à 6 pour un stator monté sur un support de longueur déterminée, **caractérisé en ce que** les différents faisceaux de bobinage (1) sont confectionnés à l'avance à la longueur du support.

8. Procédé selon la revendication 7, **caractérisé en ce que** chaque faisceau de bobinage (1) est doté aux extrémités d'éléments de raccordement à fiches.
